# EUROPEAN PATENT SPECIFICATION

(11) **EP 1 163 174 B1**
(45) Date of publication and mention of the grant of the patent: **30.06.2004**
(21) Application number: 00914372.8
(22) Date of filing: 22.03.2000
(51) Int. Cl.: B65G 1/133

(54) **GARMENTS STORAGE DEVICE**
VORRICHTUNG ZUR LAGERUNG VON KLEIDUNGSSTÜCKEN
SYSTEME DE RANGEMENT POUR VETEMENTS

(30) Priority: 23.03.1999 NL 1011646
(43) Date of publication of application: 19.12.2001
(73) Proprietor: Technico Services B.V., 2315 VC Leiden (NL)
(72) Inventor: VAN REMUNDT, Nicolaas, Hyacinthus, Maria, NL-2396 CS Koudekerk A/D Rijn (NL)
(74) Representative: Riemens, Roelof Harm
(86) International application number: PCT/NL2000/000193
(87) International publication number: WO 2000/056637

(56) References cited:
- DE-A- 4 013 844
- DE-U- 9 201 293
- FR-A- 2 707 028
- GB-A- 1 431 253
- GB-A- 2 076 351
- US-A- 2 997 133

## Description

The invention relates to a garments storage device.

A device of this nature is known, for example, from document GB-A-2 076 351. Another document, NL-A-9500506, shows a carousel with a chain which can move along a loop rail and to which a large number of hanging hooks are attached. Clothes hangers bearing garments can be hung from the hooks. The hooks hang substantially directly below the chain. The device is intended to store and release, one by one in a controlled manner, large numbers of garments, for example in chemical or industrial laundries, and in garment-sorting devices.

A drawback of the known device is that it takes up large amounts of space and is consequently expensive to use. The maximum number of garments which can be stored per m² is small. The hanging hooks have to be a relatively great distance from one another in order to enable clothes hangers bearing garments to be hung in the carousel and removed therefrom. The distance between the hooks has to be great in particular if the hooks in front of and behind a hook which is to be loaded are already occupied. Loading and unloading takes place in a straight section of the rail. For this purpose, an aisle is provided along the straight rail section. A further drawback is that adjacent garments may become jammed in the curved sections of the rail. To prevent this, the radius of curvature of the curved rail sections has to be relatively large. Together with the aisles, this makes the device rather wide.

The object of the present invention is to provide a garments storage device in which these drawbacks are overcome. In particular, the invention aims to provide a reliable garments storage device which takes up little space, even if the carousel has to be randomly loadable.

According to the invention, this object is achieved by means of a garments storage device according to claim 1. The device comprises an endless conveyor member, such as a chain, which can be driven along a guide track and to which bearing arms are attached. The bearing arms extend outwards. Those parts of the bearing arms which lie furthest outwards are each provided with a hook means for a clothes hanger bearing a garment to be hung from. The guide track comprises straight and curved track sections and is, for example, in the form of a loop. During a movement of the conveyor member along the guide track, the distances between the hook means which lie one behind the other are always automatically increased in the curved track sections and decreased in the straight track sections. In the straight track section, the bearing arms are substantially parallel to one another, while in the curved track section the outermost bearing-arm parts spread apart in the form of a fan. This advantageously allows the garments to be stored in a very compact arrangement in the straight track sections, while in the curved track sections there is automatically a large space available for loading and unloading. This allows optimum utilization of the floor area available. Since the loading and unloading takes place in the curved track sections, side aisles are no longer required.

The hook means spread apart to a greater or lesser extent in the curved track sections depending on the radius of curvature and the length of the bearing arms. The smaller the radius of curvature and the greater the length of the bearing arms, the greater the distance between the hook means becomes in the curved track sections. It is thus possible, in a simple manner, to ensure that, depending on the size of the garments, sufficient space is created around the hook means, even if the hook means in front of and behind the position to be loaded are already occupied. This makes it possible to load and/or unload the garments storage device both in batches and randomly.

It is noted that GB-A-2,075,351 shows a garments storage device which has an endless chain which is driven along a conveyor track, bearing rods which extend outwards in a direction perpendicular to the direction of movement of the chain being attached to the chain at fixed positions. However, the distances between the attachment points of the bearing rods on the chain are so great that there is only ever one or at most two bearing rods in a curved section of a conveyor track. Furthermore, the outer bearing-rod parts are not provided with hook elements, but rather the entire bearing rod is intended to have a plurality of clothes hangers hung from it. Consequently, the first clothes hanger hung from a bearing rod comes to rest against the chain. Therefore, there can be no question of increasing and reducing distances between hook elements provided on outer bearing-arm parts which can be used to good effect for hanging clothes hangers from with the device according to GB-A-2,076,351.

Preferred embodiments of the invention are defined in the subclaims.

The invention will be explained in more detail with reference to the appended drawing, in which:
Fig. 1 shows a plan view of an embodiment of a garments storage device according to the invention without garments hung in it;
Fig. 2 shows a cross-sectional view, on line II-II in Fig. 1, with garments hung from the device;
Fig. 3 shows a perspective view of the device from Fig. 1, the bearing arms in the straight track sections being indicated only diagrammatically by dashed lines;
Fig. 4 shows a partial view corresponding to Fig. 1 with garments hung up and with a partition in a free position; and
Fig. 5 shows a view corresponding to that shown in Fig. 4, with the partition in a shielding position.

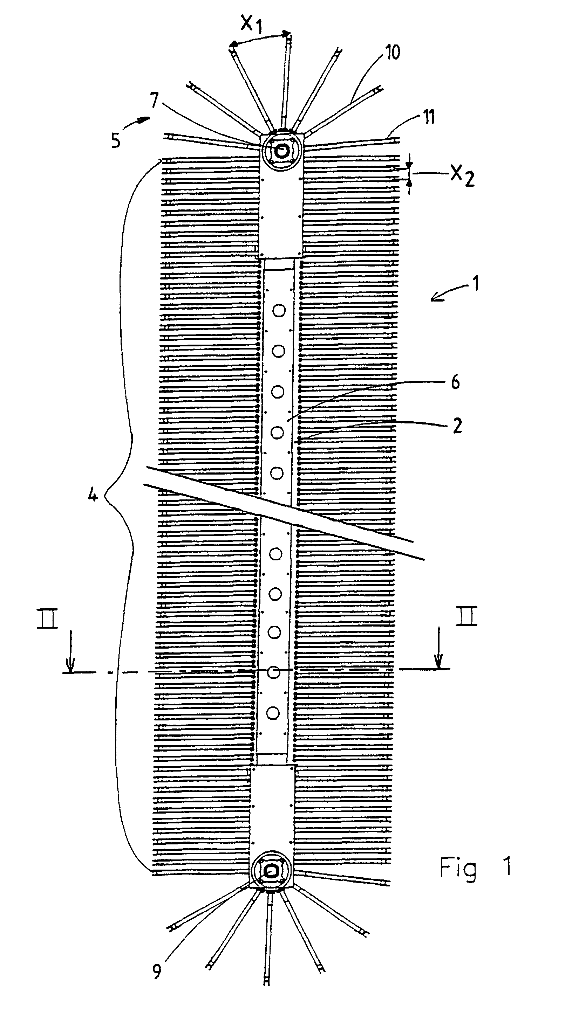

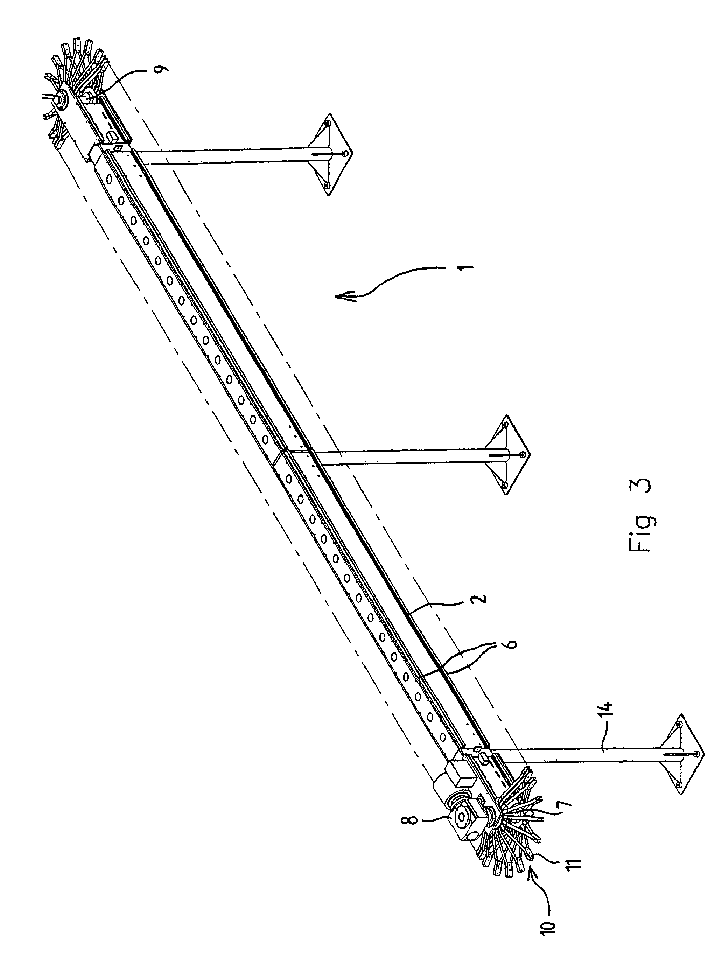

The garments storage device in Figs. 1-3 comprises a carousel 1. The carousel 1 may be positioned either on legs or in a suspended position. The carousel 1 comprises an endless conveyor member 2 which is guided around an elongate loop track. The track has two straight track sections 4 and two curved track sections 5. The straight track sections 4 are delimited by profile sections 6 which are open on one side and provided, for example, with a wear-resistant plastic layer in which the conveyor member 2 is supported. Other supports and/or guides are also possible, for example guide wheels. At one end, the conveyor member 2 is driven by a drive wheel 7 which is connected to a switch cabinet 8. At the other end, the conveyor member 2 is guided over a running wheel 9. The wheels 7, 9 delimit the curved track sections 5 and keep the conveyor member 2 taut.

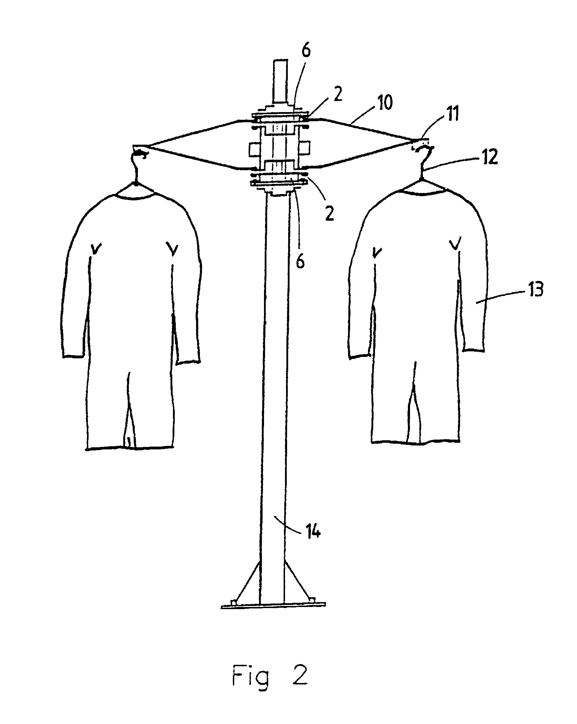

A large number of bearing arms 10 are attached to the conveyor member 2. The bearing arms 10 extend outwards from the conveyor member 2. Those parts of the bearing arms which lie furthest outwards are provided with hook means 11 for clothes hangers 12 bearing garments 13 (cf. Fig. 2) to be hung from. The length of the bearing arms 10 is such that the garment 13 cannot come into contact with the support frame 14. More particularly, the length of the bearing arms 10 is greater than half the width of the garments 13 which are to be hung from them.

The distance between two successive hook means 11 is not constant, but rather increases and decreases as the conveyor member 2 moves along the track. As can be seen clearly from Fig. 1, the distance x1 between hook means in the curved track section 5 is greater than the distance x2 between hook means in the straight track section 4. More particularly, x1 is at least double x2. This ensures, in a simple manner, that the garments in the curved track sections always automatically hang with a larger space between them, making them easier to gain access to, in particular for the purpose of loading and unloading the carousel 1.

In the embodiment shown in Fig. 2, the carousel 1 comprises two endless conveyor members 2 which are arranged one below the other and are driven synchronously by the drive wheel 7. Each bearing arm 10 is designed in the form of a V-shaped fork and is supported on both conveyor members 2. This forked design of the bearing arm 10 provides considerable stability and makes it easy to absorb the moment which is exerted on the bearing arm 10 by the weight of the garment 13. The bearing arm may also be of any other desired form.

The conveyor members 2 are in this case formed by chains. Drive belts and the like may also be used. The use of chains has the advantage that the length of a device which is to be constructed can easily be adjusted as desired, by varying the number of links. It is also possible to replace the chain with a chain having larger or smaller links. In this way, the device can easily be adapted to the size or number of garments which is to be attached to a bearing arm. The bearing arms 10 are, for example, attached around the other link on the conveyor member 2.

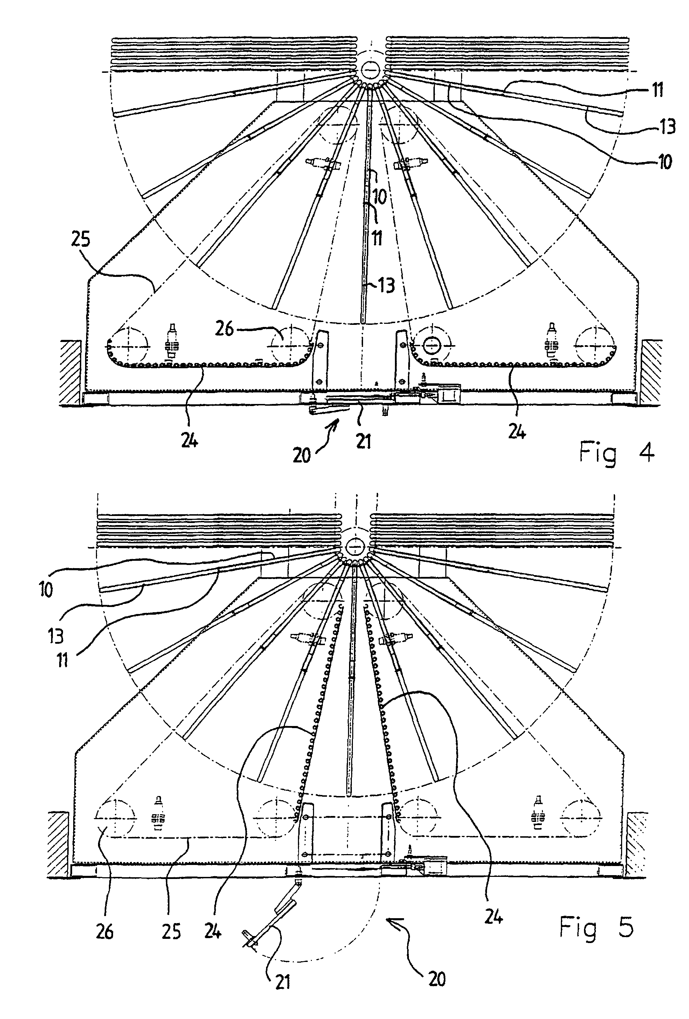

The garments storage device is advantageously used for storing and giving out personal garments one by one in a controlled manner. In Figs. 4 and 5, for this purpose an insertion and removal station 20 is provided in the curved track section. The station 20 comprises a lockable access door 21. The locking of the door 21 is controlled by control means which, as a function of a position code which is to be input, firstly ensure that a bearing-arm position associated with this code moves to directly behind the access door 21, and only then release the door 21. The user can then open the door 21 and hang a clothes hanger bearing garment 13 from the bearing arm 10 in front of the door or, if desired, remove a hanger therefrom. Then, the access door 21 is closed and a subsequent user can input his position code and hang his garment in the carousel or remove it again. The conveyor member can advantageously rotate in two directions, so that the time which is required to release a specific bearing-arm position can be minimized. In a variant, the control means are designed to ensure, after a personal code has been input, that the empty bearing-arm position which is closest to the door 21 moves to immediately behind the door 21. The user can then open the door 21, hang a garment on a clothes hanger and close the door 21 again. From that moment, this bearing-arm position is linked to the personal code. The next time this code is input, the control means ensure that the associated bearing-arm position moves to behind the door 21, so that the user can remove his garment again.

In particular, a movable partition 24 is provided behind the access door 21. The partition 24 can move between a free position (Fig. 4) and a shielding position (Fig. 5). In the free position, the bearing arms with the garments 13 hanging from them can move freely past the partition 24. In the shielding position, two parts of the partition 24 are positioned on either side of a bearing arm 10 and thus shield the bearing-arm position lying behind the access door 21 from the two adjoining bearing-arm positions. The arrangement of partitions 24 is possible since the bearing arms 10 spread apart considerably in the curved track section 5. The partition 24 is moved automatically between the free position and the shielding position by control means as soon as the desired bearing-arm position is situated behind the door 21 and the carousel 1 is at a standstill. As soon as the partition 24 is in the shielding position, the door 21 is released. This reliably ensures that only the correct garment is given out according to the position code which is to be input. Any garments which are hung from the adjoining bearing arms cannot be reached by the user. The partition parts 24 are each formed by segmented wall panels which, on the top and bottom sides, are connected to displacement means 25, which are diagrammatically indicated in Figs. 4 and 5 by dot-dashed lines and are formed, for example, by a chain which is guided along wheels 26. Since the wall panels extend from the top downwards over substantially the entire height of the carousel, garments on the adjoining bearing arms are advantageously completely protected from theft, but also from vandalism such as spraying with paint or other dirt.

The bearing arms with hook means are advantageously suitable for automatic loading and unloading. The means for automatic loading and unloading can easily be arranged in the curved track sections, since there is always sufficient free space between the hook means in those areas. The spaces which become available in the curved track sections are advantageously sufficiently large to ensure that loading and unloading can take place automatically even if the positions in front of and behind the bearing-arm position to be loaded are already occupied. As a result, the device can also be unloaded and loaded randomly, making the device eminently suitable for sorting functions. The device can also be used for a plurality of clients simultaneously. Each client can remove a desired number of garments from the carousel, after which new items can be added, without the entire carousel having to run until it is emptied, and/or after which a subsequent client order can be sorted.

In a variant, the insertion station is provided at one end and the removal station at another end of the carousel. This makes it possible to carry out loading and unloading simultaneously. In another variant, a plurality of insertion and removal stations are provided, which can be used for loading and/or unloading at a plurality of locations.

Thus, the invention provides a garments storage device which makes it possible to hang garments easily, quickly and very reliably in a carousel and then remove them again, since, in a curved section of the carousel, the space between hook means attached to bearing arms is automatically increased. In the straight section of the carousel, the bearing arms with the garments hanging from them are automatically compacted, so that the number of bearing-arm positions with garments hanging from them per m² is maximised. The device may, for example, be used as an automatic cloakroom at events or as a storage device at a business operation such as a hospital or an airport where work clothing has to be worn by the staff.

## Claims

1. Garments storage device for storing and giving out garments which are hanging on clothes hangers, comprising:
- a carousel (1) with an endless conveyor member (2), to which hanging elements are attached for clothes hangers (12) to be hung from;
- a drive unit (7) for driving the conveyor member; and
- a track along which the conveyor member (2) is guided, the track comprising straight and convexly curved track sections (4 and 5, respectively),
the distances between successive points at which the hanging elements are attached to the endless conveyor member (2) being such that there are always at least three hanging elements in a curved track section (5), wherein
the hanging elements comprise bearing arms (10) which are attached to the conveyor member (2) and extend outwards from the conveyor member (2), outer bearing-arm parts being provided with hook means (11) for the clothes hangers (12) to be hung from, so that, during a movement of the conveyor member (2) along the track, the distances between successive hook means (11) in each case increase in the curved track sections (5) and decrease in the straight track sections (4).

2. Garments storage device according to claim 1, furthermore comprising:
- an insertion station; and
- a removal station, the insertion station and removal station (20) being provided in the curved track sections (5) .

3. Garments storage device according to claim 2, in which the insertion station and the removal station (20) are provided at the same location.

4. Garments storage device according to claim 2 or 3, in which the insertion and/or removal station (20) is provided with a lockable access door (21), and in which control means are provided for moving the conveyor member (2) as a function of a position code, in such a manner that a specific bearing-arm position moves to in front of the insertion and/or removal station (20), and only then is the lockable access door (21) unlocked.

5. Garments storage device according to claim 4, in which the insertion and/or removal station (20) is provided with a partition (24) which can move between a free position, in which the carousel (1) is able to rotate, and a shielding position, in which the partition (24) shields the bearing-arm position lying behind the access door (21) from the adjoining bearing-arm positions.

6. Garments storage device according to one of the preceding claims, in which two endless conveyor members (2) are provided, which are driven synchronously, and in which each bearing arm (10) is supported on both conveyor members (2).

7. Garments storage device according to one of the preceding claims, in which the track in the straight track sections (4) is delimited by open profile sections (6) which support the conveyor member (2).

8. Garments storage device according to one of the preceding claims, in which the hook means (11) are suitable for automatic loading or unloading with coat hangers (12).

9. Method for storing and giving out garments hanging on clothes hangers using a garments storage device according to one of claims 1- 8, in which the introduction and removal of the clothes hangers takes place in the convexly curved track section.

## Patentansprüche

1. Vorrichtung zur Aufbewahrung und Ausgabe von Kleidung, die auf Kleiderbügeln hängen, mit:
- einem Karussell (1) mit einem Endlos-Förderbandteil (2), an das Hängeelemente angeordnet sind, an die Kleiderbügel (12) gehängt werden;
- einer Antriebseinheit (7) zum Antreiben des Förderbandteils; und
- einer Führung, in der das Förderbandteil (2) geführt ist, wobei die Führung gerade und konvex gebogene Führungsabschnitte (4 bzw. 5) aufweist, wobei die Abstände zwischen aufeinander folgenden Punkten, an denen die Hängeelemente an dem Endlos-Förderbandteil (2) derart angeordnet sind, dass jeweils mindestens drei Hängeelemente in einem gebogenen Führungsabschnitt (5) angeordnet sind, wobei die Hängeelemente Tragarme (10) aufweisen, die an dem Förderbandteil (2) angeordnet sind und sich auswärts von dem Förderbandteil (2) weg erstrecken und der auswärts weisende Teil des Tragarmes mit einem Hakenteil (11) versehen ist, an das die Kleiderbügel (12) gehängt werden, so dass während einer Bewegung des Förderbandteils (2) entlang der Führung die Abstände zwischen den aufeinander folgenden Hakenteilen (11) jedes Mal in dem gebogenen Führungsabschnitt (5) vergrößert werden und in dem geraden Führungsabschnitt (4) verkleinert werden.

2. Vorrichtung zur Aufbewahrung von Kleidung nach Anspruch 1, mit weiterhin:
- einer Einhängestation; und
- einer Ausgabestation, wobei die Einhängestation und die Ausgabestation (20) in dem gebogenen Führungsabschnitt (5) angeordnet sind.

3. Vorrichtung zur Aufbewahrung von Kleidung nach Anspruch 2, bei der die Einhängestation und die Ausgabestation (20) an der selben Seite angeordnet sind.

4. Vorrichtung zur Aufbewahrung von Kleidung nach Anspruch 2 oder 3, bei der die Einhänge- und/oder Ausgabestation (20) mit einer schließbaren Zugangstüre (21) ausgestattet ist und in der Kontrollmittel zur Bewegung des Förderbandteils (2) als Funktion eines Positions-Codes der Art vorgesehen sind, dass eine spezielle Tragarm-Position vor die Einhänge- und/oder Ausgabestation (20) bewegt wird und nur dann die schließbare Zugangstüre (21) aufgeschlossen ist.

5. Vorrichtung zur Aufbewahrung von Kleidung nach Anspruch 4, in der die Einhänge- und/oder Ausgabestation (20) mit einer Abtrennung (24) ausgestattet ist, die sich zwischen einer freien Position, in der das Karussell (1) in der Lage ist, gedreht zu werden und einer Abschirmposition, in der die Abtrennung (24) die Tragarm-Position, die hinter der Zugangstüre (21) liegt, von den angrenzenden Tragarm-Positionen abschirmt, bewegt.

6. Vorrichtung zur Aufbewahrung von Kleidung nach einem der vorangegangenen Ansprüche, in der zwei Endlos-Förderbandteile (2) vorgesehen sind, die synchron zueinander angetrieben werden und in der jeder Tragarm (10) an beiden Förderbandteilen (2) abgestützt ist.

7. Vorrichtung zur Aufbewahrung von Kleidung nach einem der vorangegangenen Ansprüche, in der die Führung in den geraden Führungsabschnitten (4) durch offene Profilabschnitte (6) begrenzt ist, die das Förderbandteil (2) abstützen.

8. Vorrichtung zur Aufbewahrung von Kleidung nach einem der vorangegangenen Ansprüche, in der die Hakenmittel (11) für automatisches Einhängen oder Aushängen von Kleiderbügeln (12) ausgebildet sind.

9. Verfahren zur Aufbewahrung und Ausgabe von auf Kleiderbügeln aufgehängter Kleidung unter Verwendung einer Vorrichtung zur Aufbewahrung von Kleidung gemäß einem der Ansprüche 1 bis 8, in der das Einhängen und Herausnehmen der Kleiderbügel in dem konvex gebogenen Führungsabschnitt stattfindet.

## Revendications

1. Dispositif de stockage de vêtements pour stocker et distribuer des vêtements qui sont suspendus sur des cintres, comprenant :
un carrousel (1) avec un élément de transport sans fin (2), sur lequel des éléments de suspension sont fixés pour y suspendre les cintres (12) ;
une unité d'entraînement (7) pour entraîner l'élément de transport ; et
une voie le long de laquelle l'élément de transport (2) est guidé, la voie comprenant des parties de voie en ligne droite et en courbe convexe (4 et 5, respectivement),
Les distances entre les points successifs au niveau desquels les éléments de suspension sont fixés à l'élément de transport sans fin (2) étant telles qu'il y a toujours au moins trois éléments de suspension au niveau d'une partie de voie en courbe (5), dans lequel
les éléments de suspension comprennent des bras de support (10) qui sont fixés à l'élément de transport (2) et s'étendent vers l'extérieur à partir de l'élément de transport (2), les parties de bras de support extérieures étant munies de moyens d'accrochage (11) pour y suspendre les cintres (12), de manière à ce que, au cours d'un mouvement de l'élément de transport (2) le long de la voie, les distances entre les moyens d'accrochage (11) successifs dans chaque cas augmentent au niveau des parties de voie en courbe (5) et diminuent au niveau des parties de voie en ligne droite (4).

2. Dispositif de stockage de vêtements selon la revendication 1, comprenant en outre :
un poste d'insertion ; et
un poste de retrait, le poste d'insertion et le poste de retrait (20) étant disposés au niveau des parties de voie en courbe (5).

3. Dispositif de stockage de vêtements selon la revendication 2, dans lequel le poste d'insertion et le poste de retrait (20) sont disposés au même endroit.

4. Dispositif de stockage de vêtements selon la revendication 2 ou la revendication 3, dans lequel le poste d'insertion et/ou de retrait (20) est muni d'une porte d'accès verrouillable (21), et dans lequel des moyens de commande sont fournis pour déplacer l'élément de transport (2) en fonction d'un code de position, de telle sorte qu'une position de bras de support spécifique se déplace vers l'avant du poste d'insertion et/ou de retrait (20), et la porte d'accès verrouillable (21) n'est déverrouillée qu'à ce moment-là.

5. Dispositif de stockage de vêtements selon la revendication 4, dans lequel le poste d'insertion et/ou de retrait (20) est muni d'une cloison (24) qui peut se déplacer entre une position libre, dans laquelle le carrousel (1) est capable de tourner, et une position de protection, dans laquelle la cloison (24) protège la position de bras de support située derrière la porte d'accès (21) par rapport aux positions de bras de support voisines.

6. Dispositif de stockage de vêtements selon l'une quelconque des revendications précédentes, dans lequel deux éléments de transport sans fin (2) sont fournis, ces derniers étant entraînés de manière synchrone, et dans lequel chaque bras de support (10) est supporté par les deux éléments de transport (2).

7. Dispositif de stockage de vêtements selon l'une quelconque des revendications précédentes, dans lequel la voie au niveau des parties de voie en ligne droite (4) est délimitée par des parties de profil ouvertes (6) qui supportent l'élément de transport (2).

8. Dispositif de stockage de vêtements selon l'une quelconque des revendications précédentes, dans lequel les moyens de suspension (11) sont adaptés pour un chargement ou un déchargement automatique avec des cintres (12).

9. Procédé pour stocker et distribuer des vêtements suspendus sur des cintres utilisant un dispositif de stockage de vêtements selon l'une des revendications 1 à 8, dans lequel l'introduction et le retrait des cintres a lieu au niveau de la partie de voie en courbe convexe.
